# EUROPEAN PATENT APPLICATION

(11) **EP 2 687 874 A1**
(43) Date of publication of application: **22.01.2014**
(21) Application number: 13003245.1
(22) Date of filing: 26.06.2013
(51) Int. Cl.: G01W 1/14

(54) **Rain gauge with automatic priming siphon**

(30) Priority: 29.06.2012 ES 201231015
(71) Applicant: Geonica, S.A., 28039 Madrid (ES)
(72) Inventor: Gómez Carrió, Carlos, 28039 Madrid (ES)
(74) Representative: Tari Lazaro, Aida

(57) **Abstract**

Which uses the principle of indirect measurement of the rainfall by determination of its weight, for which it has a base (1), on which rests on a load cell (3) bearing a container (2) which receives the rainwater via a mouth (4). The emptying of the container (2) is assured periodically by means of a siphon (7), with the container (2) presenting a variable section with a minimum at the height of the bend of the siphon (7). In this way the priming time of the siphon (7) is radically reduced without affecting its discharge time.

In addition, the bottom of the container (2) presents a reduction in section, and attached to it is a damper (6) which directly receives the rainwater channelled via the mouth (4). In this way the precision and security of functioning of the siphon (7) are furthermore increased.

## Description

This invention relates to a rain gauge which incorporates an automatic priming siphon which presents an improved operation in the priming and discharge. Its field of application is that of instrumentation for weather stations and more specifically for the measurement of rainfall.

### BACKGROUND OF THE INVENTION

The simplest rain gauge consists of a receptacle provided with a graduated scale, suitably arranged for receiving rainwater. Such a solution only allows the total rainfall to be obtained between one reading and the next.

In order to solve that problem the rocker rain gauge was developed, as described in document ES 287166 U from the actual applicant. The device comprises a rocker provided with two cups which are alternatively filled with water and emptied to the outside. The measurement is carried out on the basis of the number of times the rocker tilts, which is detected by a microswitch. The device has low resolution and a low response speed, and is unsuitable for low rainfall intensities and for high ones. Its range of application is limited.

Siphon rain gauges do not have any moving parts in general, and in theory they seemed to be a very attractive solution. Nevertheless, they present problems during the priming and discharge of the siphon.

Let us recall that a siphon consists of a hollow tube with an inverted "U" shape with its two arms being joined by a bend. In order for the siphon to work, one of its ends has to be submerged in a liquid and the other end has to be at a lower height than the first end.

In a siphon rain gauge the water is collected in a container in such a way that the level of the liquid progressively rises. When the water reaches the upper limit of the interior section of the siphon bend the priming takes place, at which moment the water starts to descend through the tube forming the siphon due to the effect of gravity, creating a suction effect in the part of the tube introduced into the container, causing it to become completely emptied. The system is stable provided there is no air inside the tube, and in this way the system will remain primed. Once the level of the liquid in the container descends to the height of the inlet for the tube, air will enter into it and the system will become deprimed, causing the tube to discharge its entire liquid from its interior. As of that moment, the system will return to the initial point and the level in the container will start to rise.

However, the problem is that with low rainfall intensities the level in the container increases little by little. When the level of liquid reaches the lower part of the transverse section of the siphon bend a slow loss of water takes place due to overflow. This loss of water has the effect of reducing the rate at which level of liquid rises in the container. If the intensity of the rainfall is low, the priming time increases considerably. During this time, when the tube is partially discharging water without reaching the point of becoming primed, the measurement is erroneous.

If the diameter of the siphon tube, which is habitually circular, and consequently its section, is reduced, the critical height and the priming time are lessened, but the discharge time during which there is no measurement is considerably lengthened.

In order to try to solve this problem, various devices have been conceived. So, document GB 190008809 describes a recording rain gauge in which the container descends as its weight increases as far as a point where its tilting is produced, which causes a sudden priming of a discharge siphon. The mechanism is complex and is prone to malfunctioning and wear.

Document GB 191030040 describes a recording rain gauge in which the measurement is made mechanically on the basis of a float provided in the container. When a certain level is reached the float actuates a lever which triggers the sudden priming of a siphon on the basis of the water contained in a tank provided for this purpose. The mechanism is prone to wear.

Document GB 162501 describes a float recording rain gauge which uses a siphon with concentric inlet and outlet arms covered with a cap arranged at a very short distance, with the aim of favouring priming due to capillary action. The problem of the excessive priming time is partially solved, though at a cost of considerably increasing the discharge time.

Document GB 722717 describes a float recording rain gauge which uses a siphon with a squashed bend in order to reduce the priming height. If the width of the bend is simultaneously increased in order not to appreciably reduce the section of throat in the discharge, then the improvement introduced by reducing the height of the bend is partially lost, given that the speed of overflowing of the siphon is also increased. Consequently, it is an objective of this invention to provide a recording rain gauge in which the priming and discharge times of the siphon are minimised, thereby increasing the useful recording time per cycle.

It is another objective of this invention to provide a recording rain gauge without moving parts.

### DESCRIPTION OF THE INVENTION

In order to achieve the proposed objectives, a rain gauge is conceived which uses the principle of indirect measurement of the rainfall by determination of its weight, for which a container is provided which receives the rainfall and which rests on a load cell. The emptying of the container is assured periodically by means of a siphon, with the container having a variable section with a minimum at the height of the siphon bend. This minimum refers to the minimum that can be constructed in that specific zone and not in relation to the section in other zones of the container.

The basis of the invention lies in overcoming a technical prejudice that is common in rain gauge technology, which has been inherited from the times when a graduated scale or a float attached to a recording device was used for taking the measurement. If the measurement of the rainfall is done by means of determining the weight, then the shape of the container is irrelevant and, consequently, its section along its height can be variable, being greater in the middle and lower zone in order to assure a high volume and useful recording times and minimum at the height of the siphon bend in order to sharply increase the speed with which the level of liquid rises in the container, thus reducing priming times. Note that while rain gauges which directly measure the rise in level have to have a constant section in order to assure a linear increase, when the rainfall is measured indirectly by determination of weight we can play around with the sections of the container and the speed with which the level of liquid rises in it in order to best suit our needs.

In short, the inventive concept of the invention appears by detecting that the choice of shapes and values relating to the sections of the different elements comprising the rain gauge can be used to solve the stated problem. The most important factor in the speed with which the level rises is not the intensity of the rainfall but the effective section of the surface of the level of liquid. The usual way of expressing the rainfall both in volume per unit surface area and in height contributes to this confusion. The expression of rainfall in height is only valid if the surface area of capture and the surface area of storage coincide. This would explain why various solutions have been sought unaucceasfully for this problem for many years.

Surprisingly, in spite of the apparent simplicity of the proposed solution, the concept used in the invention is very powerful in terms of results. A reduction in the diameter of the container (if it is circular) by a factor of 6 implies a reduction factor in the priming time of 36. And this is without affecting the discharge time.

If the above idea is combined with a siphon comprising an inlet arm and a discharge arm joined at their upper part by a bend of elongated section, of height lower than its width, then a certain added improvement is obtained, as has been explained in the critical description of the prior art.

In addition, it has been seen that the fall of the water in the container from a certain height produces bubbles, which affect the precision and security of the moment when the operation of discharging the siphon ends. In order to improve this aspect, the container can be provided with a damper on which the rainwater falls instead of doing so directly onto the surface of the water in the container.

The security of the end of the discharge period can also be improved if the lower part of the container presents a reduction in its section, in such a way that towards the end of the discharge, when the level of liquid is dose to the lower part of the inlet arm of the siphon, the speed at which the level drops is a maximum. This can be advantageously achieved simply by having the bottom of the container inclined. The solution is based on the same inventive concept used for reducing the priming time.

The advantages of the rain gauge of the invention are considerable.
- The priming time of the siphon is reduced.
- The precision with which the siphon is discharged is improved.
- The useful recording time is considerably increased, with which the influence of the priming time and the discharge time is irrelevant.
- There are no moving parts, so its cost is reduced and its reliability is improved.

### BRIEF DESCRIPTION OF THE DRAWINGS

In order to complement the foregoing description, and with the aim of aiding a better understanding of the characteristics of the invention, a detailed description is going to be made of a preferred embodiment, on the basis of a set of plans accompanying this descriptive specification and in which the following has been represented in an illustrative and non-limiting basis.
Figure 1 shows a detail in section of the priming process while the overflow is taking place in the bend of the siphon, in a conventional embodiment
Figure 2 shows a view in section of the rain gauge of the invention.
Figure 3 show a view in transverse section of the bend of the siphon of the rain gauge of the invention.

In the above figures, the numerical references correspond to the following parts and elements.
1. Base
2. Container
3. Load cell
4. Mouth
5. Support
6. Damper
7. Siphon
8. Inlet arm
9. Discharge arm
10. Bend

### DETAILED DESCRIPTION OF A PREFERRED EMBODIMENT

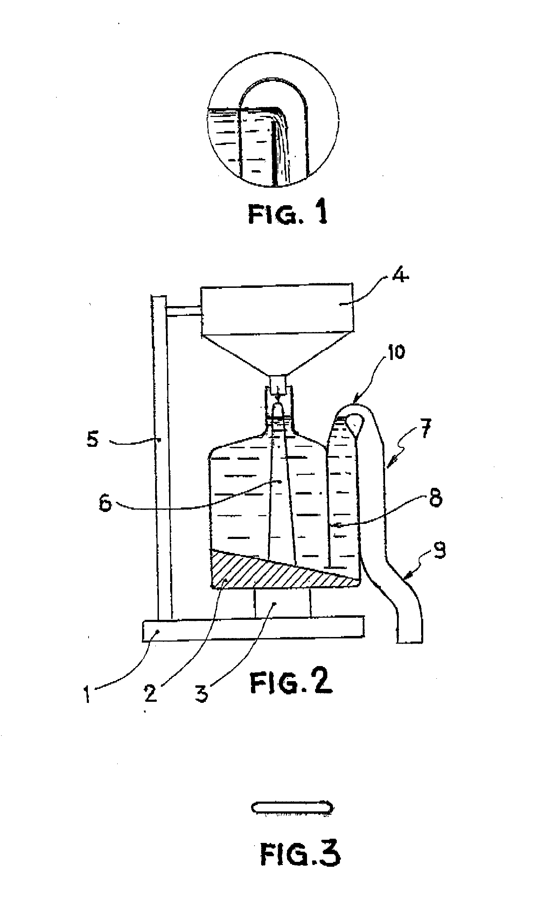

In figure 1 the moment of overflow of the siphon during the process of priming a conventional rain gauge can be seen. Note the excessive height of the section of bend due to using a tube with constant circular section.

Figures 2 and 3 show the rain gauge of the invention comprising a base (1) on which rests the container (2) with a load cell (3) in between. The rainwater is channelled towards the container (2) via a mouth (4) attached to a support (5), falling on a damper (6) joined to an inclined plane forming the bottom of the container (2). Advantageously, the damper (6) presents the shape of a slightly conical rod with a rounded tip.

In the container (2) is a siphon (7) made up of an inlet arm (8) and a discharge arm (9) joined in their upper part by a bend (10). Its transverse section is elongated, with low height in relation to its width, as can be seen in figure 3.

The transverse section of the container (2) is constant in its middle part and as large as possible, with the aim of achieving a large storage volume and, consequently, allowing for a long recording time before priming of the siphon. The transverse section of the container (2) is as narrow as possible in its upper part so that speed at which the level rises can be fast

The functioning of the rain gauge of the invention is as follows. Initially, the rainwater is channelled via the mouth (4) towards the damper (6) with the level rising slowly in the container (2), due to the considerable section that it presents in its middle part. The weight of the rainwater contained in the container (2) is transmitted by the load cell (3) to a measuring and recording device which does not properly form part of the invention and will be very familiar to a person skilled in the art (microprocessor, digital memory, communications port, etc.). When the level of the liquid in the container (2) is close to the height of the bend (10) of the siphon (7) the speed at which the level rises will increase sharply due to the sudden reduction in the section of the container (2), which means that the priming will take place very rapidly. Once the siphon (7) is primed, the discharge also occurs rapidly since the section of throat is high both in the bend (10), owing to its width, and in the inlet arm (8), and in the discharge arm (9). Advantageously, the section of throat in both arms will have a circular shape which is the optimum for the circulation of fluids.

There are a series of variants and alternatives which are evident to a person skilled in the art which, respecting the essence of the invention, adapt the embodiment to the design and to the available means of production.

The dimensions and the materials to use shall be those that are appropriate to its function.

The shape of the sections of the container (2) and of the siphon (7) is free, respecting all the concepts constituting the basis of the invention. The bottom of the container (2) has been described in the preferred embodiment as an inclined plane, though it could equally be a conical surface, or it could present any functionally equivalent shape. The determination of the weight of rainwater will be able to be done by means of any method, It will be advantageous to use a load cell (3), though balance devices, springs or any equivalent solution could also be used.

## Claims

1. Rain gauge with automatic priming siphon, of the type which determines the weight of rainwater contained in a container (2) which is discharged periodically by means of a siphon (7) comprising an inlet arm (8) and a discharge arm (9) joined in their upper part by a bend (10), **characterised in that** the container (2) is of variable section with a minimum at the height of the bend (10) of the siphon (7).

2. Rain gauge with automatic priming siphon as claimed in claim 1, **characterised in that** the bend (10) of the siphon (7) presents en elongated transverse section of height less than its width.

3. Rain gauge with automatic priming siphon as claimed in claim 1, **characterised in that** the determination of the weight of rainwater is made by means of a load cell (3).

4. Rain gauge with automatic priming siphon as claimed in claim 1, **characterised in that** the container (2) presents a reduction in section in its lower part.

5. Rain gauge with automatic priming siphon as claimed in claim 4, **characterised in that** the reduction in section of the lower part of the container (2) is done by means of an inclined plane.

6. Rain gauge with automatic priming siphon as claimed in claim 4, **characterised in that** the reduction in section of the lower part of the container (2) is done by means of a conical surface.

7. Rain gauge with automatic priming siphon as claimed in claim 1, **characterised in that** the rainwater is channelled by means of a mouth (4) towards a damper (6) provided in the container (2).
